# EUROPÄISCHE PATENTSCHRIFT

(11) **EP 0 646 312 B1**
(45) Veröffentlichungstag und Bekanntmachung des Hinweises auf die Patenterteilung: **26.05.1999**
(21) Anmeldenummer: 94112702.9
(22) Anmeldetag: 13.08.1994
(51) Int. Cl.: A01G 9/14

(54) **Pflanzenpalette**
Plant pallet
Palette pour plantes

(30) Priorität: 01.10.1993 CH 2963/93
(43) Veröffentlichungstag der Anmeldung: 05.04.1995
(73) Patentinhaber: ROMAY AG, CH-5727 Oberkulm (CH)
(72) Erfinder: Worni, Guido, CH-5736 Burg (CH)
(74) Vertreter: Groner, Manfred

(56) Entgegenhaltungen:
- AT-B- 366 226
- DE-A- 2 930 044
- DE-C- 3 713 497

## Beschreibung

Die vorliegende Erfindung bezieht sich auf einen Bauteilsatz gemäss dem Oberbegriff des Anspruchs 1 und eine Pflanzenpalette gemäss dem Oberbegriff des Anspruchs 4.

In modernen Gewächshäusern werden Einzelpflanzen in Töpfen gezogen und die Töpfe mit der eingepflanzten Jungpflanze für die Dauer ihres Wachstums bis zur gewünschten Handelsgrösse auf Pflanzenpaletten gestellt. Der Boden der Pflanzenpalette ist mit längs- und querverlaufenden Bewässerungsrillen versehen. Während des Pflanzenwachstums liegen die mit Töpfen gefüllten Pflanzenpaletten auf einem Untergestell (auch Wannenhalterung genannt). Das geordnete Abstellen der Pflanzentöpfe und ihr dichtes Aufreihen auf den Pflanzenpaletten sowie der Transport der letzteren und ihr Auflegen auf das Untergestell erfolgt meist in einem automatisierten Vorgang. Diese mechanisierte und selbsttätige Handhabung der Pflanzenpalette bewirkt nebst hohen Ansprüchen an deren Masshaltigkeit auch solche an deren Dichtheit, damit keine Leckwasserverluste eintreten. Solche Wasserverluste haben vorallem bei einer rechnergesteuerten Pflanzenpflege schwerwiegende Nachteile auf die Produktivität einer Anlage.

Die Pflanzenpaletten werden regelmässig am Ort der Produktionsanlage zusammengebaut. Sie bestehen aus einem rechteckigen Aluminiumrahmen mit den Boden tragenden Querstreben, in den als Palettboden mehrere mit Bewässerungsrillen versehene Platten nacheinander eingeschoben sind, so dass die Bewässerungsrillen miteinander fluchten. Die an den Rahmen angrenzenden Plattenränder sind am Rahmen hochgezogen; die aneinander grenzenden Plattenränder dagegen überlappen sich und sind durch eine Leimnaht wasserdicht miteinander verklebt. Das Verbinden bzw. Verkleben der überlappenden Plattenränder ist zeitaufwendig und führt zu Unregelmässigkeiten, die oft ein Lecken der Palette zur Folge haben.

Die vorliegende Erfindung stellt sich daher die Aufgabe, eine rasch montierbare Pflanzenpalette zu schaffen, deren den Palettboden bildende Platten rasch und zuverlässig dicht verbindbar sind.

Erfindungsgemäss wird diese Aufgabe gelöst durch die kennzeichnenden Merkmale der Ansprüche 1 bzw. 4.

Anhand der beiliegenden schematischen Zeichnung wird die Erfindung beispielsweise erläutert. Es zeigen:
- Fig. 1: eine perspektivische Explosionsdarstellung eines Untergestells und einer Pflanzenpalette,
- Fig. 2: einen Schnitt längs der Linie II-II in Fig. 1 und
- Fig. 3: einen vergrösserten Querschnitt durch eine Dichtleiste.

Ein Untergestell 1 besteht aus zwei im Querschnitt L-förmigen Längsträgern 2, die mit Querstreben 3 verbunden und auf Beine 4 aufgesetzt sind. Auf solche Untergestelle 1 sind während des Pflanzenwachstums die mit Pflanzentöpfen besetzten Pflanzenpaletten 5 abgestellt. Eine Pflanzenpalette 5 weist drei aneinander grenzende Platten 6, 7, 8 auf, die den Palettboden bilden. Sie sind in einen rechteckigen Aluminiumrahmen 9 mit U-Profil eingeschoben. Im Bereich der Nahtstellen der Platten 6, 7, 8 ist der Aluminiumrahmen 9 durch Querstreben 11 versteift, die auch die vergleichsweise dünnen Platten 6, 7, 8 aus tiefgezogenem Styropor oder dgl. Material unter Last an einer unerwünschten Durchbiegung hindern. Beim Zusammenbau der Pflanzenpalette 5 werden vor dem Anbringen der zweiten Stirnleiste 10 nacheinander die Platten 8, 7 bzw. 6 zwischen die Längsträger des Rahmens 9 geschoben und danach längs den einander zugewandten Seiten wasserdicht miteinander verbunden.

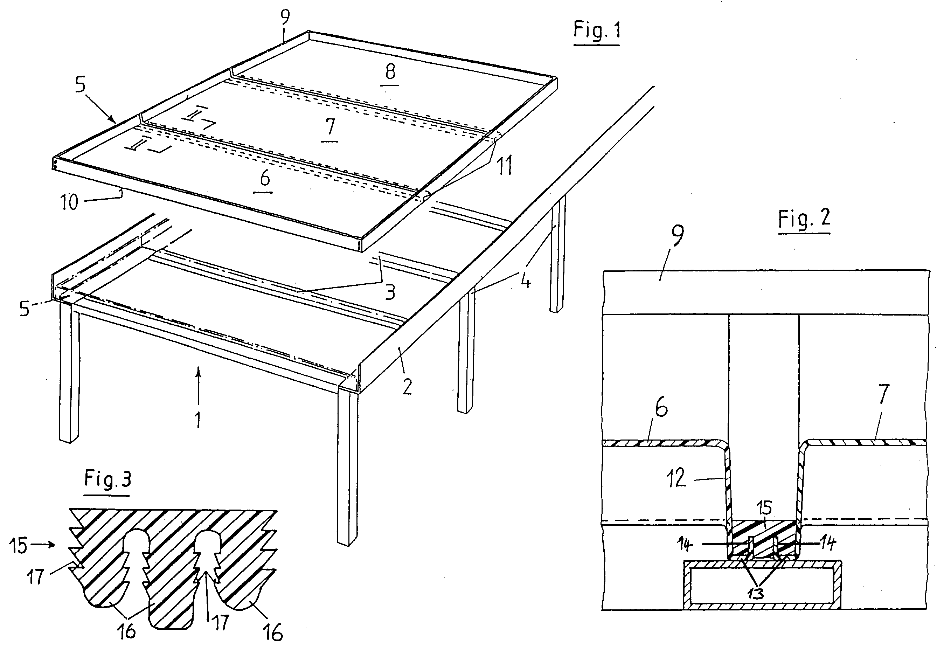

Die Plattenverbindung ergibt sich aus Fig. 2. An die einander zugewandten, nach unten gezogenen Randbereiche 12 der Platten 6, 7, 8 sind einander zugewandt im Querschnitt U-förmige Bördel 13 angeformt, so dass die einander zugewandten Schenkel 14 im wesentlichen parallel sind.

Die Bördel 13 sind durch eine gummielastische Dichtleiste 15 verbunden, die an der Oberseite eben ist und mit den angrenzenden Bewässerungsrillen fluchtet und die an der Unterseite drei parallele Längsrippen 16 aufweist. In und zwischen die Bördel 13 sind die drei längsparallelen Dichtrippen 16 geklemmt, die die beiden Platten 6, 7 dicht verbinden. Die Breite der beiden äusseren Rippen 16 der Dichtleiste 15 ist etwas grösser als die Innenbreite der Bördel 13 und die Breite der beiden Schlitze zwischen den Rippen 16 ist etwas kleiner als die Wandstärke der Bördel 13. Beim Einsetzen der Dichtleiste 15 in die Bördel 13 erleidet diese somit eine elastische Verformung, wodurch nicht nur eine dichte sondern auch eine zuverlässige mechanische Verbindung zwischen den Platten 6, 7 entsteht. Damit das Einlegen der Dichtleiste 15 mit vergleichsweise kleiner Kraft und daher rasch und zuverlässig erfolgen kann, sind die Flanken der Rippen 16 in Längsrichtung vorzugsweise mit Rillen 17 versehen. Besonders geeignet ist eine Rillenform mit Sägezahnprofil, die an der Rippenaussenseite widerhakenartige Lamellen bildet, die sich beim Einlegen der Dichtleiste in die Bördel 13 elastisch federnd zurücklegen und beim Herausnehmen der Dichtleiste nach aussen aufspreizen und die Dichtwirkung erhöhen.

Der Zusammenbau einer Palette 5 mit dem anmeldungsgemässen Plattenboden ist vergleichsweise einfach. Zuerst werden die Platten 6, 7, 8 in den Aluminiumrahmen 9 eingeschoben und die Stirnleiste 10 befestigt. Danach werden die Dichtleisten 15 zwischen zwei benachbarten Platten 6, 7 bzw. 7, 8 eingelegt und mittels einer Rolle oder eines Stabes in die entsprechenden Bördel 13 hineingedrückt.

## Patentansprüche

1. Bauteilsatz zur Herstellung des Bodens einer Pflanzenpalette (5) mit mindestens zwei seitlich wasserdicht miteinander zu verbindenden Platten (6, 7, 8), gekennzeichnet durch an den einander zugewandten, nach unten gezogenen und an den Platten angeformte Randbereiche (12) bildenden Seiten (12) der Platten (6, 7, 8) vorhandene, nach oben offene U-Profilbördel (13) und durch eine gummielastische Dichtleiste (15), die zwei parallele, unter elastischer Kompression in die Bördel (13) eindrückbare Rippen (16) aufweist.

2. Bauteilsatz nach Anspruch 1, dadurch gekennzeichnet, dass die Dichtleiste (15) zwischen den beiden erwähnten Rippen (16) eine dritte, die Bördel (13) von zwei benachbarten Platten (6, 7, 8) distanzierende Rippe (16) aufweist.

3. Bauteilsatz nach Anspruch 1 oder 2, dadurch gekennzeichnet, dass die Flanken der Rippen (16) Lamellen bildende Längsrillen (17) mit Sägezahnprofil aufweisen, derart, dass sich die Lamellen beim Eindrücken der Dichtleiste (15) in die Bördel (13) an die Rippe (16) anlegen und sich beim Entfernen der Dichtleiste (15) widerhakenartig aufspreizen.

4. Pflanzenpalette (5) mit einem Tragrahmen (9), in den ein mit dem Bauteilsatz nach einem der Ansprüche 1 bis 3 gefertigter Boden eingesetzt ist.

5. Pflanzenpalette nach Anspruch 4, dadurch gekennzeichnet, dass die an den Rahmen (9) angrenzenden Ränder der Platten (6, 7, 8) am Rahmen (9) hochgezogen sind.

6. Pflanzenpalette nach Anspruch 4 oder 5, dadurch gekennzeichnet, dass die Dichtleiste (15) zwischen den beiden erwähnten Rippen (16) eine dritte, die Bördel (13) distanzierende Rippe (16) aufweist.

7. Pflanzenpalette nach einem der Ansprüche 4 bis 6, dadurch gekennzeichnet, dass die Flanken der Rippen (16) Lamellen bildende Längsrillen (17) mit Sägezahnprofil aufweisen, derart, dass sich die Lamellen beim Eindrücken der Dichtleiste (15) in den Bördel an die Rippen (16) anlegen und sich beim Entfernen der Dichtleiste (15) widerhakenartig aufspreizen.

8. Pflanzenpalette nach einem der Ansprüche 4 bis 7 mit in den Platten (6, 7, 8) vorhandenen Bewässerungsrillen, dadurch gekennzeichnet, dass die Oberseite der Dichtleiste (15) bündig mit dem Boden der Bewässerungsrillen ist.

## Claims

1. Set of components for producing the base of a plant pallet (5) with at least two panels (6, 7, 8) which are to be connected to one another such that they are watertight at the sides, characterized by upwardly open U-profile flanges (13) which are provided on the mutually facing sides (12) of the panels (6, 7, 8), said sides being drawn downwards and forming border regions (12) which are integrally formed on the panels, and by an elastomeric sealing strip (15) which has two parallel ribs (16) which can be forced, with elastic compression, into the flanges (13).

2. Set of components according to Claim 1, characterized in that, between the two ribs (16) mentioned above, the sealing strip (15) has a third rib (16), which spaces apart the flanges (13) of two adjacent panels (6, 7, 8).

3. Set of components according to Claim 1 or 2, characterized in that the flanks of the ribs (16) have lamella-forming longitudinal grooves (17) with a sawtooth profile, such that the lamellae are positioned against the rib (16) when the sealing strip (15) is forced into the flanges (13) and spread out in a barb-like manner when the sealing strip (15) is removed.

4. Plant pallet (5) with a carrying frame (9) into which there is inserted a base produced by the set of components according to one of Claims 1 to 3.

5. Plant pallet according to Claim 4, characterized in that those borders of the panels (6, 7, 8) which are adjacent to the frame (9) are drawn upwards on the frame (9).

6. Plant pallet according to Claim 4 or 5, characterized in that, between the two ribs (16) mentioned above, the sealing strip (15) has a third rib (16), which spaces apart the flanges (13).

7. Plant pallet according to one of Claims 4 to 6, characterized in that the flanks of the ribs (16) have lamella-forming longitudinal grooves (17) with a sawtooth profile, such that the lamellae are positioned against the ribs (16) when the sealing strip (15) is forced into the flange and spread out in a barb-like manner when the sealing strip (15) is removed.

8. Plant pallet according to one of Claims 4 to 7 having watering channels provided in the panels (6, 7, 8), characterized in that the top side of the sealing strip (15) is flush with the base of the watering channels.

## Revendications

1. Ensemble d'éléments pour la fabrication du fond d'une palette pour plantes (5) ayant au moins deux plaques (6, 7, 8) à raccorder l'une à l'autre latéralement de manière étanche, caractérisé par une bordure profilée en U (13) ouverte vers le haut, disposée sur les côtés (12) des plaques (6, 7, 8) tournés l'un vers l'autre, étirés vers le bas et formant des zones de bord (12) formées sur les plaques, et par une nervure d'étanchéité (15) en plastique élastomère, qui présente deux côtes (16) parallèles pouvant être enfoncées dans la bordure (13) par compression élastique.

2. Ensemble d'éléments selon la revendication 1, caractérisé en ce que la nervure d'étanchéité (15) entre les deux côtes (16) mentionnées présente une troisième côte (16) d'écartement de la bordure (13) de deux plaques voisines (6, 7, 8).

3. Ensemble d'éléments selon la revendication 1 ou 2, caractérisé en ce que les flancs des côtes (16) présentent des stries longitudinales (17) formant des lamelles de profil en dents-de-scie, de telle sorte que les lamelles s'appliquent contre la côte (16) lorsque l'on enfonce la nervure d'étanchéité (15) dans la bordure (13) et s'écartent à la manière de barbes lors du retrait de la nervure d'étanchéité (15).

4. Palette pour plantes (5) avec un cadre support (9), dans lequel est inséré un fond construit avec l'ensemble d'éléments selon l'une quelconque des revendications 1 à 3.

5. Palette pour plantes selon la revendication 4, caractérisée en ce que les bords des plaques (6, 7, 8) adjacents au cadre (9) sont remontés sur le cadre (9).

6. Palette pour plantes selon la revendication 4 ou 5, caractérisée en ce que la nervure d'étanchéité (15) entre les deux côtes mentionnées (16) présente une troisième côte (16) d'écartement de la bordure (13).

7. Palette pour plantes selon l'une quelconque des revendications 4 à 6, caractérisée en ce que les flancs des côtes (16) présentent des stries longitudinales (17) formant des lamelles de profil en dents-de-scie, de telle sorte que les lamelles s'appliquent contre les côtes (16) lorsque l'on enfonce la nervure d'étanchéité (15) dans la bordure et s'écartent à la manière de barbes lors du retrait de la nervure d'étanchéité (15).

8. Palette pour plantes selon l'une quelconque des revendications 4 à 7, avec des stries d'irrigation prévues dans les plaques (6, 7, 8), caractérisée en ce que la face supérieure de la nervure d'étanchéité (15) affleure le fond des stries d'irrigation.
